(19) **Europäisches Patentamt**
**European Patent Office**
**Office européen des brevets**

(11) **EP 2 547 053 B1**

(12) **EUROPEAN PATENT SPECIFICATION**

(45) Date of publication and mention
of the grant of the patent:
**30.11.2016 Bulletin 2016/48**

(51) Int Cl.:
***H04L 12/70*** *(2013.01)*

(21) Application number: **11305919.0**

(22) Date of filing: **13.07.2011**

(54) **Distribution of data units among interfaces of a node of a packet-switched communication network**

Verteilung von Dateneinheiten unter Schnittstellen eines Knotens eines paketvermittelten Kommunikationsnetzwerks

Distribution d'unités de données dans des interfaces d'un noeud de réseau de communication commuté par paquets

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.01.2013 Bulletin 2013/03**

(73) Proprietor: **ALCATEL LUCENT**
**92100 Boulogne-Billancourt (FR)**

(72) Inventors:
• **Pasotti, Marco**
**25067 Lumezzane (IT)**

• **Barzaghi, Giorgio**
**20069 Vaprio d'Adda (IT)**
• **Vodola, Francesco**
**20038 Seregno (IT)**

(74) Representative: **Colombo, Stefano Paolo**
**Marchi & Partners S.r.l.**
**Via Vittor Pisani, 13**
**20124 Milano (IT)**

(56) References cited:
**US-A1- 2003 108 063    US-A1- 2006 015 917**

**Description**

**Technical field**

The present invention generally relates to the field of packet-switched communication networks. In particular, the present invention relates to the distribution of data units among interfaces terminating communication links at a node of a packet-switched communication network.

**Background art**

In a packet-switched communication network, two network nodes may be connected by a number of communication links which carry traffic flows between the two network nodes. Each node comprises a corresponding number of transmission/reception interfaces configured to terminate the links that enter/exit the node. Typically, the traffic flows exchanged between the network nodes may carry different services, each of them being associated to one or more Classes of Service (CoS).

As known, each traffic flow exchanged between the nodes of a packet-switched communication network comprises a plurality of data units in turn comprising a number of bytes each. Each data unit is formatted according to a set of protocols of the ISO-OSI protocol stack implemented at the network nodes. For instance, in an Ethernet communication network, network nodes exchange data in the form of Ethernet frames.

Typically, when a network node transmits data units through a plurality of communication links exiting the node, a mechanism for distributing the data units among the transmission interfaces (in the following simply referred to as "interfaces") terminating the communication links may be implemented, in order to select the communication link on which the data units have to be transmitted. According to the type of service or application, the algorithm for distributing the data units among the interfaces terminating the links exiting the node may be implemented alternatively at layer 2 (i.e. the data link layer) or at layer 3 (i.e. the network layer) of the ISO-OSI protocol stack.

Link aggregation is a known technique defined by the standard IEEE 802.1AX-2008, that provides for aggregating one or more links between two nodes of a communication network so as to form a single logical link called Link Aggregation Group (briefly, LAG) having an overall bandwidth equal to the sum of the bandwidths of the single links composing the LAG.

According to the above mentioned standard, which operates at layer 2 of the ISO-OSI protocol stack, data units to be transmitted by a LAG are distributed among all the interfaces (and hence the links) comprised within the LAG, which must have equal capacities. In order to distribute the data units among the interfaces comprised within the LAG, hash functions are commonly used. Hash functions operate on the content of one or more fields comprised within the data units, for example the destination MAC address field or the IP address field, and distribute the data units among the interfaces of the LAG in a random way. The distribution of the data units among the interfaces of the LAG is performed regardless of the CoS of the service carried by the data units. Once the data units are distributed among the interfaces of the LAG, they may be transmitted over each link by applying suitable traffic prioritization mechanisms on the basis of their CoS. In other words, the distribution of the data units among the interfaces of the LAG is performed before any forwarding/scheduling operation based on the CoS of the data units, which is in charge to the transmission interface.

At layer 3 of the ISO-OSI protocol stack, load balancing mechanisms are known. They are typically implemented at the routers of the communication network. When multiple paths are possible between a source node and a destination node of the network, the routers comprised within such paths assign a cost to each path (on the basis, for example, of the distance between nodes) and forward the data units over the path having the minimum cost. When two or more paths have the same cost, the router in charge of forwarding the data units over the paths having the same cost typically distributes the data unit among the paths on the basis of, for example, the destination address contained within them. As known, the load balancing mechanism may be based on a round robin algorithm. For instance, if three different paths are possible between a source node and a destination node, a router in charge of distributing the data units among the paths may forward a first data unit over the first available path, a second data unit over the second available path, a third data unit over the third available path, a fourth data unit again over the first available path, and so on.

D1 (US2003/0108063, published on 2003-06-12) discloses a data forwarding algorithm for a node with multiple interface.

**Summary of the invention**

The inventors noticed that the known mechanisms for distributing data units among the interfaces of a node of a packet-switched communication network have some drawbacks.

In particular, the distribution mechanisms at layer 2 of the ISO-OSI protocol stack used in connection with the link aggregation technique do not allow optimizing the usage of the communication links comprised within the LAG.

Indeed, the layer 2 distribution mechanism described above is based on the usage of hash functions. This mechanism disadvantageously does not provide for an efficient usage of the full available capacity of the LAG, since it does not take into account the dynamic status of occupation of the communication resources (namely, interfaces and communication links). This is a particularly challenging aspect especially in the field of wireless communication networks, since the available capacity of the communication links (i.e. wireless or radio links) is typically limited. Moreover this capacity is variable depending mainly on the propagation condition of the radio signal (e.g. atmospheric conditions).

Besides, the link aggregation technique provides for distributing the data units before implementing any traffic prioritization mechanism based on the CoS. As discussed above, data units are typically distributed among the interfaces regardless of their CoS. The CoS is managed afterwards, when the transmission interfaces forward the data units to the respective communication links. Disadvantageously, a situation may arise in which data units of higher priority (i.e. higher CoS) may be discarded and lost. Indeed, since the distribution mechanism is implemented regardless of the CoS of the data units, bursts of data units having higher priority may be forwarded towards a same interface. It may happen that this interface becomes overloaded with such higher priority data traffic and hence, in this case, some data units are disadvantageously discarded. Therefore, the exploitation of the communication links by the known distribution mechanism is not optimized.

Further, disadvantageously, the mechanism for distributing the data units implemented in a LAG requires interfaces (and hence communication links) with equal capacities. Furthermore, this mechanism in not able to take into account a possible variation of the capacities of the interfaces/links. This drawback is particularly critical in the field of wireless communication networks, wherein typically the Adaptive Coding Modulation technique is applied. When the Adaptive Coding Modulation technique is applied, the modulation, coding and possibly other parameters of the radio signal are adapted according to the propagation conditions present on the wireless or radio link. It follows that also the capacity of the interface/link is adapted to the propagation conditions present on the link itself. Such conditions indeed vary as a function of different time-varying factors such as, for example, the atmospheric conditions, the multipath interferences, etc.

Also the known distribution mechanisms at layer 3 of the ISO-OSI protocol stack disadvantageously do not allow optimizing the usage of the communication resources. Indeed, according to such mechanisms the routers forward the data units regardless of the status of dynamic occupation of the communication resources.

In view of the above, the inventors have addressed the problem of providing a method for distributing data units among interfaces at a node of a packet switched communication network which overcomes the aforesaid drawbacks.

In particular, the inventors have addressed the problem of providing a method for distributing data units among interfaces which may be applied to communication links having different capacities and which allows optimizing the usage of the communication links by taking into account the status of dynamic occupation of the links.

In the following of the present description and in the claims, the expression "data unit" will designate a sequence of bytes. It is thus understood that the expression "data unit" may indicate, without limitation, a packet, a datagram, a frame, a fragment, a segment or a cell of data comprising a fixed or variable number of bytes.

According to a first aspect, embodiments of the present invention provide a node of a packet-switched communication network, the node comprising:

- at least two transmission interfaces having respective transmission capacities, the at least two transmission interfaces being associated to respective counters;
- a dispatcher configured to distribute data units of a traffic flow to the at least two transmission interfaces; and
- a control logic configured to, upon reception of a data unit:

  - determine a minimum value among respective values of the counters;
  - operate the dispatcher to forward the data unit to the transmission interface associated to the counter having the minimum value; and
  - increase the minimum value by a number indicative of a length of the data unit,

the control logic being further configured to decrease the values at respective rates equal to the respective transmission capacities.

Preferably, the node further comprises, upstream to the dispatcher, a scheduler configured to:

- receive the data units of the traffic flow; and
- determine respective classes of service associated to the data units.

Preferably, the scheduler is further configured to, if the traffic flow has a transmission rate higher than an overall capacity of the at least two transmission interfaces, deciding whether to discard one or more of the data units based on the determined classes of service.

Preferably, the scheduler is further configured to:

- determine, on the basis of the determined classes of service, an order according to which the data units are to be forwarded to the dispatcher; and
- forward the data units to the dispatcher according to the determined order.

Preferably, the dispatcher is further configured to determine the length of the data unit and to inform the control logic of the length.

Preferably, the dispatcher is configured to determine the length by counting a number of bits or bytes comprised within the data unit.

Preferably, the control logic is configured to periodically decrease the values by respective amounts with respective periods, the respective amounts and the respective periods being adjusted in order to match the respective transmission capacities.

Preferably, the control logic is further configured to

- associate to the at least two transmission interfaces respective thresholds;
- determine the respective thresholds by:

  - determining a minimum delay among delays of the at least two transmission interfaces;
  - determining a maximum capacity among the transmission capacities; and
  - computing the threshold associated to each of the at least two transmission interfaces as a difference between the delay of each of the at least two transmission interfaces and the minimum delay and multiplying the difference by the maximum transmission capacity,

- stop decreasing the values when they become equal to the respective thresholds.

Preferably, the node comprises at least two outdoor units and an indoor unit, wherein the at least two transmission interfaces are comprised in the outdoor units and the dispatcher and the control logic are comprised within the indoor unit.

According to a second aspect, embodiments of the present invention provide a packet-switched communication network comprising a node as set forth above.

According to a third aspect, embodiments of the present invention provide a method for distributing data units of a traffic flow to at least two transmission interfaces of a node of a packet-switched communication network, the at least two transmission interfaces having respective transmission capacities, the at least two transmission interfaces being associated to respective counters, the method comprising, for a data unit of the traffic flow:

  a) determining a minimum value among respective values of the counters;
  b) forwarding the data unit to the transmission interface associated to the counter having the minimum value; and
  c) increasing the minimum value by a number indicative of a length of the data unit,

the method further comprising decreasing the values at respective rates equal to the respective transmission capacities.

According to a fourth aspect, embodiments of the present invention provide a computer program product comprising computer-executable instructions for performing, when the program is run on a computer, the steps of the method as set forth above.

## Brief description of the drawings

Embodiments of the invention will be better understood by reading the following detailed description, given by way of example and not of limitation, to be read with reference to the accompanying drawings, wherein:

- Figure 1 shows an exemplary block scheme of a node of a packet-switched communication network according to a first embodiment of the present invention;
- Figures 2 and 3 show the node of Figure 1 during operation;
- Figure 4 is a flow chart illustrating the operation of the node of Figure 1; and
- Figure 5 shows an exemplary block scheme of a node of a packet-switched wireless communication network according to a second embodiment of the present invention.

**Detailed description of preferred embodiments of the invention**

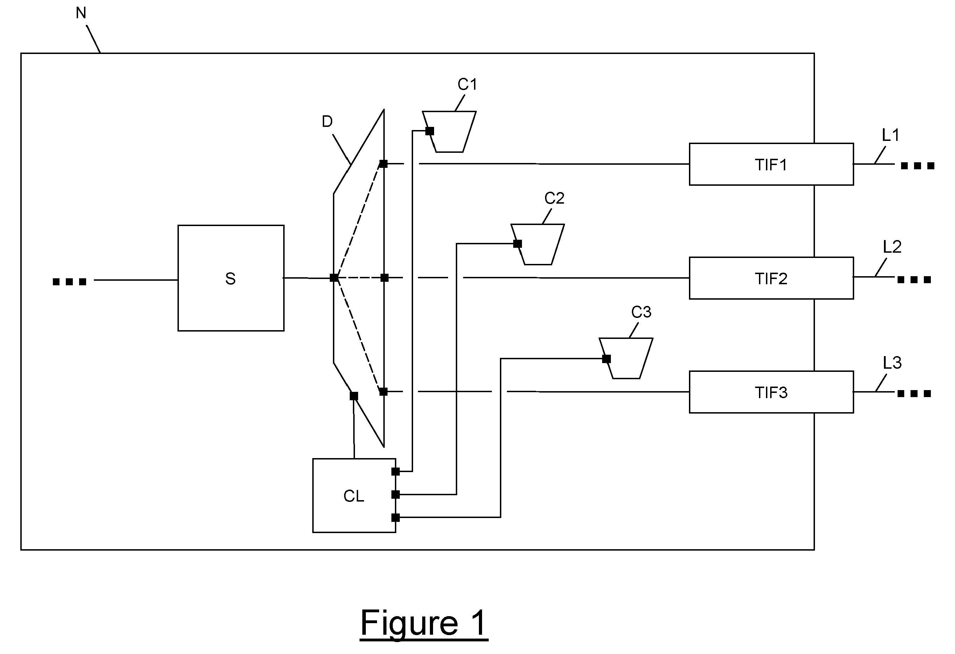

Figure 1 schematically shows an exemplary node N of a packet-switched communication network, according to a first embodiment of the present invention. The packet-switched communication network may be a wired network or a wireless network. The packet-switched communication network may be for example an Ethernet network.

The network node N shown in Figure 1 preferably comprises a scheduler S, a dispatcher D, a number NI of transmission interfaces, a number NC of counters and a control logic CL. The number of transmission interfaces NI and the number of counters NC are both integer numbers preferably higher than 1. The number of counters NC is preferably equal to the number of transmission interfaces NI. Each counter is preferably associated to a respective transmission interface. The transmission interfaces terminate respective communication links which connect the network node N to a further node of the communication network, not shown in the Figures. Hence, the counter associated to a transmission interface is also associated to the link terminated by that transmission interface.

Other modules, components or devices, comprised in the node N are not shown in Figure 1, since they are not relevant for the present description.

In the first embodiment shown in Figure 1, by way of non limiting example, the network node N comprises a first transmission interface TIF1, a second transmission interface TIF2, a third transmission interface TIF3 (i.e. NI=3), which terminate respective communication links L1, L2, L3. The network node N of Figure 1 further comprises a first counter C1 associated to the first transmission interface TIF1, a second counter C2 associated to the second transmission interface TIF2 and a third counter C3 associated to the third transmission interface TIF3 (i.e. NC=3).

The dispatcher D has an input connected to the output of the scheduler S and a number of outputs connected to the transmission interfaces TIF1, TIF2, TIF3. The control logic CL preferably cooperates with the dispatcher D and with the counters C1, C2, C3.

The scheduler S, the dispatcher D, the transmission interfaces, the control logic CL and the counters may include blocks which can be hardware devices, software modules or combinations of hardware devices and software modules.

The scheduler S is configured to receive from other components of the network node N, not shown in Figure 1, a traffic flow comprising a plurality of data units. Each data unit of the traffic flow preferably comprises a field indicative of a Class of Service (CoS) associated to the service carried by the data unit. The scheduler S is preferably configured to read within each received data unit the field indicative of the CoS associated to the data unit. According to the read value, the scheduler S is preferably configured to determine the CoS associated to each data unit and to determine accordingly an order according to which the data units comprised within the traffic flow are forwarded downstream the scheduler S.

The dispatcher D is configured to receive from the scheduler S the data units according to the order determined by the scheduler S on the basis of the CoS associated to the data units, and to distribute such data units among the transmission interfaces TIF1, TIF2, TIF3.

The transmission interfaces TIF1, TIF2, TIF3 are preferably configured to receive the data units from the dispatcher D and to forward them over the communication links L1, L2, L3 which exit the network node N. Each transmission interface TIF1, TIF2, TIF3 (and, accordingly, each communication link L1, L2, L3 connected thereto) is configured to operate at a respective data transmission capacity (or, simply, capacity) TR1, TR2, TR3. If, for instance, the communication network is an Ethernet network, the transmission interfaces TIF1, TIF2, TIF3 are Ethernet interfaces, i.e. transmission interface operating at layers 1 and 2 of the ISO-OSI protocol stack and implementing the Ethernet technology. The capacity of each transmission interface TIF1, TIF2, TIF3 may be, for example, the speed of the physical communication link (e.g. 1 Gb/s for a 1000 BASE-X Ethernet interface) or it may be the throughput at layer 2 or 3 associated to the physical communication link.

The control logic CL is configured to manage each counter C1, C2, C3, as it will be described in further detail herein after.

Each counter C1, C2, C3 has a value V1, V2, V3 which indicates the expected traffic load of the associated transmission interface TIF1, TIF2, TIF3. More particularly, each time a data unit is forwarded to a transmission interface TIF1, TIF2, TIF3, the value V1, V2, V3 of the counter C1, C2, C3 associated to that transmission interface is increased by a number equal to the length (expressed e.g. in bits or bytes) of that data unit. Besides, the value V1, V2, V3 of each counter C1, C2, C3 is decreased at a rate substantially equal to the capacity TR1, TR2, TR3 of the associated transmission interface TIF1, TIF2, TIF3. The purpose of each counter C1, C2, C3 is to provide an estimate in real-time of the traffic load of the respective transmission interface TIF1, TIF2, TIF3, which is represented as a FIFO (First In First Out) queue which receives from the dispatcher D the data units to be transmitted and from which the data units are extracted at the respective capacity TR1, TR2, TR3. The value of each counter C1, C2, C3 is therefore indicative of the number of bits or bytes being transferred by the network node N towards a further network node (not shown in the Figures) of the communication network through the associated transmission interface TIF1, TIF2, TIF3 and link L1, L2, L3.

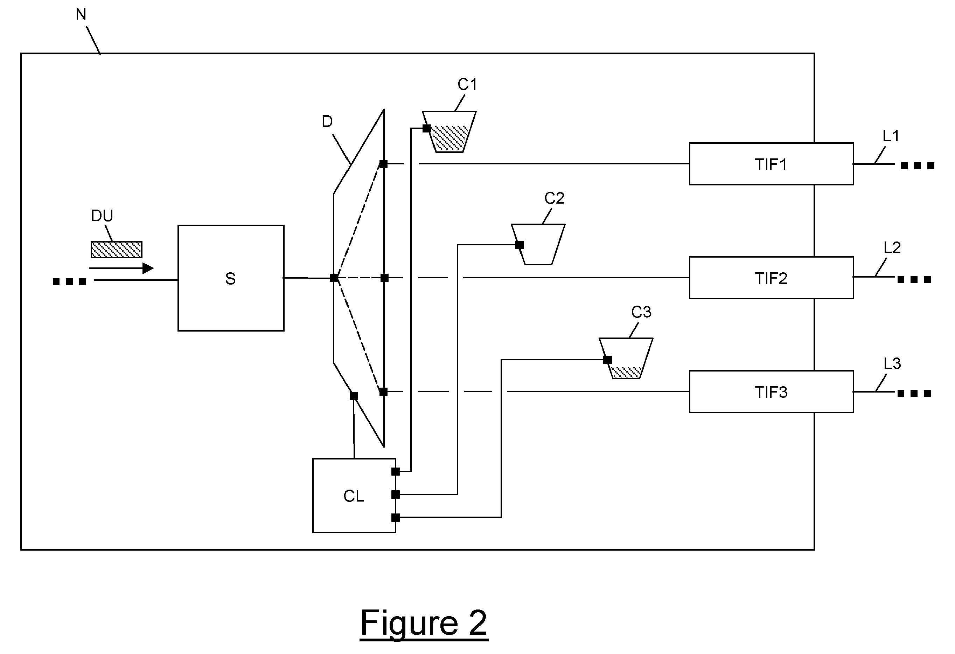

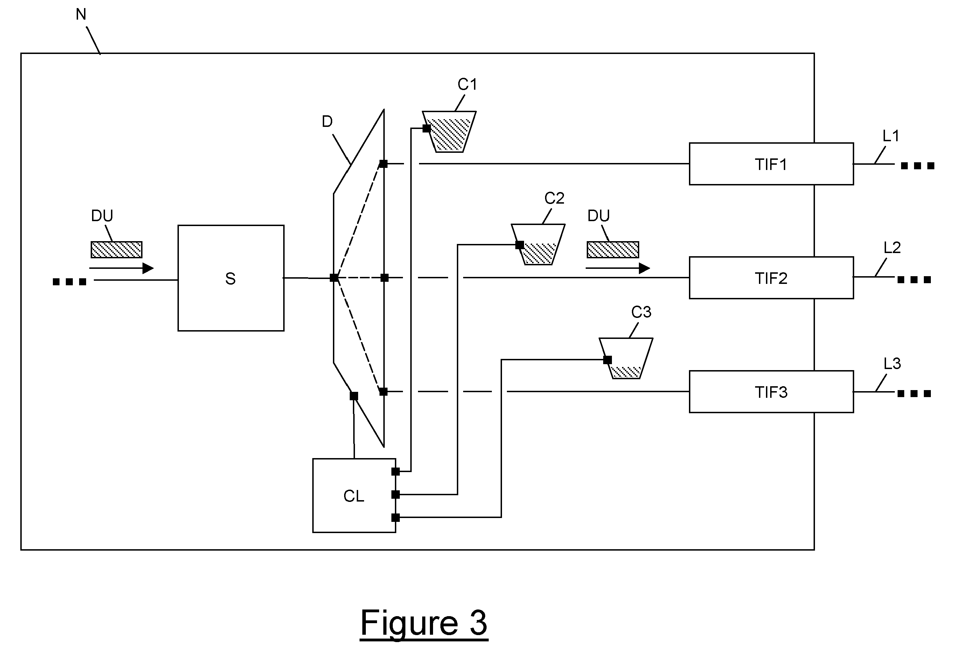

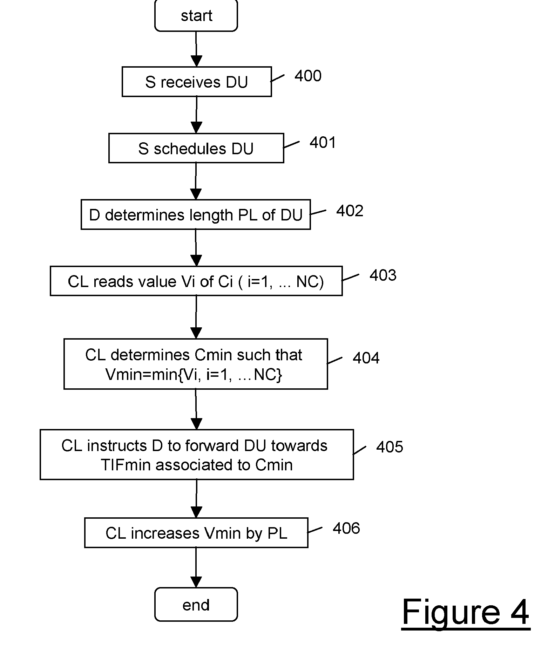

With reference to Figures 2 and 3 and to the flow chart of Figure 4, the operation of the node N and its components (in particular, the scheduler S and the control logic CL) will be now described in detail.

In operating conditions, the scheduler S receives (from other components of the network node N not shown in Figure 1) one or more traffic flows, each comprising a number of data units. In particular, during step 400, the scheduler S receives a data unit DU, as shown in Figure 2.

Afterwards, at step 401, the scheduler S determines the CoS (Class of Service) of the data units - including the data unit DU - of the received traffic flows (e.g. by reading the field of data units indicative of their CoS). Based on the determined CoS, the scheduler S may decide to discard one or more data units of the received traffic flows in order to guarantee that the overall transmission rate of the data units forwarded to the transmission interfaces TIF1, TIF2, TIF3 does not exceed their overall capacity TR1+TR2+TR3. Herein after, it is assumed that the data unit DU is not discarded by the scheduler S.

Further, at step 401 the scheduler S preferably determines an order of transmission of the non discarded data units (including the data unit DU) towards the dispatcher D. Then, the scheduler S preferably forwards the data unit DU to the dispatcher D according to the order of transmission determined during step 401 (step not shown in Figure 4).

When the data unit DU is received by the dispatcher D, the dispatcher D, during step 402, preferably determines a length PL of the data unit DU and informs the control logic CL of the determined length PL. According to a preferred embodiment of the present invention, the length PL of a data unit DU is determined as the number of bits or bytes comprised within the data unit DU. The dispatcher D may perform the determination of step 402 by counting the number of bits or bytes of the data unit DU or by reading a field comprised in the data unit DU which indicates the length of the data unit or the length of the data unit payload expressed in bits or bytes. It is assumed, as an example, that the data unit DU has a length equal to 64 bytes.

Then, during step 403, the dispatcher D sends a command to the control logic CL so that the control logic CL reads the value V1, V2, V3 of each counter C1, C2, C3. In Figures 2 and 3, each counter C1, C2, C3 is represented as a bucket and its value V1, V2, V3 is represented as a shadowed region inside the bucket.

For example, it is assumed that, as illustrated in Figure 2, when the control logic CL reads the values V1, V2, V3 of the counters C1, C2, C3, the value V1 of the first counter C1 and the value V3 of the third counter C3 are different from zero, while the value V2 of the second counter C2 is equal to zero. It is further assumed that the value V1 of the first counter C1 is higher than the value V3 of the third counter C3 (e.g. V1=100 bytes, V2=0 and V3= 64 bytes).

Once the control logic CL has read the values V1, V2, V3 of the counters C1, C2, C3, the control logic CL, during step 404, determines a minimum value Vmin among the values V1, V2, V3 of all the counters C1, C2, C3, according to the following equation:

$$Vmin = \min\{Vi, i = 1, ..., NC\} . \qquad [1]$$

In particular, the control logic CL preferably identifies a counter Cmin among the counters C1, C2, C3 having the minimum value Vmin. In the example considered above, Vmin=0 and Cmin=C2.

During step 405, the control logic CL instructs the dispatcher D to forward the data unit DU towards one of the transmission interfaces TIF1, TIF2, TIF3. In particular, during step 405 the control logic CL preferably instructs the dispatcher D to forward the data unit DU towards the transmission interface associated to the counter Cmin having the minimum value Vmin. In the example considered above, the control logic CL instructs the dispatcher D to forward the data unit DU towards the second transmission interface TIF2 which is associated to the counter C2 having the minimum value Vmin zero.

If two or more counters C1, C2, C3 have their values equal to the minimum value Vmin, during step 405, the control logic CL may instruct the dispatcher D to forward the data unit DU towards any of the transmission interfaces associated to such counters. The transmission interface may be selected according to any predetermined criterion (for instance, different priorities may be assigned to the transmission interfaces and, in case of counters with a same value, the transmission interface having the highest priority among the transmission interfaces associated to such counters is selected).

Then, as illustrated in Figure 3, the dispatcher D forwards the data unit DU towards the transmission interface associated to the counter Cmin having the minimum value Vmin.

Then, the control logic CL, during step 406, preferably increases the value Vmin of the counter Cmin by a number equal to the length PL (expressed in bits or bytes) of the data unit DU. Step 406 may be performed after step 405 or substantially at the same time as step 405. For the example considered above, during step 406, the control logic CL increases the value V2 of the second counter C2 from zero to PL=64 bytes.

Steps 400-406 described above are preferably repeated for each data unit DU of each traffic flow received at the scheduler S. During the execution of steps 400-406, the control logic CL preferably decreases the value V1, V2, V3 of each counter C1, C2, C3 at a rate substantially equal to the capacity TR1, TR2, TR3 of the respective transmission interface TIF1, TIF2, TIF3. Preferably, if the value V1, V2, V3 of a counter C1, C2, C3 reaches the value zero, the value of that counter is not further decreased.

Decreasing the value V1, V2, V3 of each counter C1, C2, C3 is preferably performed by periodically decreasing the value V1, V2, V3 by a given amount K1, K2, K3 with a period P1, P2, P3. The values K1, K2, K3 and/or the periods P1, P2, P3 are preferably selected so that each ratio K1/P1, K2/P2, K3/P3 is substantially equal to the respective capacity TR1, TR2, TR3. The periods P1, P2, P3 may be locked to a local clock of the node N. In this case, the period P1, P2, P3 preferably have the same value and the amounts K1, K2, K3 are adjusted for matching the capacities TR1, TR2, TR3. For example, it is assumed that the period P1 is 8 μsec and that the capacity TR1 of the first transmission interface TIF1 is equal to 12.5 Mb/s. Then, the control logic CL may select K1=100 bit so that the ratio K1/P1 is equal to TR1=12.5 Mb/s.

Alternatively, the periods P1, P2, P3 may be selected by the control logic CL and they may be different one from another.

Advantageously, the method described above allows distributing the data units among the different transmission interfaces (and, accordingly, among the different communication links) of the network node N in such a way that the usage of the transmission resources is optimised.

In particular, differently from the known distribution mechanism implemented within a LAG, which provides for having all links with equal capacity, the method of the present invention may be implemented when the transmission interfaces indifferently have equal or different capacities.

Indeed, the method of the present invention distributes the data units among interfaces on the basis of the values of the counters associated to the interfaces. The value of each counter is at any time indicative of the amount of data units actually transferred through the associated transmission interface at the respective capacity. Therefore, distributing each data unit towards the interface whose associated counter has the minimum value advantageously allows avoiding overflows also when the interfaces have different capacities, since at any time the data unit is forwarded to the least loaded interface.

If the capacity of a transmission interface varies (for example, according to the implementation of the Adaptive Coding Modulation technique), such variation is advantageously applied at the corresponding counter by accordingly varying the rate at which its value is decreased.

It is assumed, for example, that the capacity of the first transmission interface TIF1 varies from TR1 to TR1*. Preferably, such a variation is notified to the scheduler S and to the control logic CL. For example, a signalling message may be sent to the scheduler S and to the control logic CL comprising the new value TR1* of the capacity of the first transmission interface TIF1. Upon reception of the notification, the scheduler S starts forwarding the data units to the dispatcher D at a rate which takes into account the new capacity and the control logic CL starts instructing the first counter C1 (i.e. the counter associated to the first transmission interface TIF1) to decrease its value V1 according to the new capacity TR1* of the first transmission interface TIF1.

This way, advantageously, the method shown in Figure 4 is able to match the different capacities of the different transmission interfaces (and, accordingly, of the different communication links) of the network node N and also to take into account the possible variation of the capacity of one or more interfaces. This advantageously allows using the transmission resources in an efficient way, since each data unit is forwarded towards the transmission interface that at any time is transferring the minimum amount of data.

Besides, advantageously, the distribution of the data units amongst the transmission interfaces by the control logic CL is performed after the scheduler S has set an order of transmission for the data units on the basis of their CoS. This way, advantageously, the method guarantees that the priority of the data units (and accordingly of the services transported by the data units) is preserved. Therefore, in the presence of a traffic overload, the scheduler S forwards to the dispatcher D the data units with higher priority and possibly discards the data units with lower priority. In other words, for each service supported by the network node, the Service Level Agreement is guaranteed.

According to an advantageous variant of the method described above, the control logic CL knows not only the capacities TR1, TR2, TR3 of the transmission interfaces TIF1, TIF2, TIF3, but also the nominal values of the delays introduced by each transmission interface upon the data units. In particular, the control logic CL knows the nominal value of a first delay D1 introduced by the first transmission interface TIF1, the nominal value of a second delay D2 introduced by the second transmission interface TIF2 and the nominal value of a third delay D3 introduced by the third transmission interface TIF3.

The nominal values of the delays D1, D2, D3 may be notified to the control logic CL through respective signalling messages which are sent to the control logic CL either by the interfaces or another component of the network node N, non shown in the drawings.

According to this advantageous variant, the control logic CL preferably computes, for each counter C1, C2, C3, a respective threshold T1, T2, T3. In particular, the control logic CL:

a) determines a minimum delay Dmin among the delays D1, D2, D3 of the transmission interfaces TIF1, TIF2, TIF3,

according to the following equation:

$$Dmin = min\{Di, \quad i = 1, ..., NI\};\qquad [2]$$

b) determines a maximum capacity TRmax among the capacities of the transmission interfaces TIF1, TIF2, TIF3 according to the following equation:

$$TRmax = max\{TRi, \quad i = 1, ..., NI\};\qquad [3]$$

c) computes a threshold T1, T2, T3 for each counter C1, C2, C3 according to the following equation:

$$Ti = (Di - Dmin) \cdot TRmax, \quad i = 1, ..., NC.\qquad [4]$$

Therefore, according to the example above, the control logic CL computes a first threshold T1 for the first counter C1, a second threshold T2 for the second counter C2 and a third threshold T3 for the third counter C3.

When the thresholds T1, T2, T3 are determined, before starting receiving the data units (step 400 of Figure 4), the control logic CL sets the value V1, V2, V3 of each counter C1, C2, C3 equal to the respective threshold T1, T2, T3. In particular, the value V1 of the first counter C1 is set equal to the first threshold T1, the value V2 of the second counter C2 is set equal to the second threshold T2 and the value V3 of the third counter C3 is set equal to the third threshold T3.

Then, steps 400-406 described above are preferably repeated for each data unit DU of each traffic flow received by the scheduler S.

During the execution of steps 400-406, the value V1, V2, V3 of each counter C1, C2, C3 is preferably increased by the length of each data unit forwarded to the associated transmission interface TIF1, TIF2, TIF3 and is decreased at a rate corresponding to the capacity TR1, TR2, TR3 of the associated transmission interface TIF1, TIF2, TIF3. Preferably, if the value V1, V2, V3 of a counter C1, C2, C3 reaches the respective threshold T1, T2, T3, the control logic CL preferably stops decreasing that value V1, V2, V3. Hence, the thresholds T1, T2 and T3 represents respectively the minimum values below which the values V1, V2, V3 of the counters C1, C2, C3 are not allowed to fall.

If the capacity of a transmission interface varies (for example, according to the implementation of the Adaptive Coding Modulation technique), such variation is advantageously applied at the corresponding counter by accordingly varying the rate at which the value of the counter is decreased. Similarly, if the delay of a transmission interface varies (again, for example, according to the implementation of the Adaptive Coding Modulation technique), such variation is advantageously applied at the corresponding counter by accordingly varying its associated threshold.

It is assumed, for example, that the delay of the first transmission interface TIF1 varies from D1 to D1*. Preferably, such a variation is notified to the control logic CL. For example, a signalling message may be sent to the control logic CL comprising the new value D1* of the nominal delay of the first transmission interface TIF1. Upon reception of the notification, the control logic CL computes a new threshold T1* using the new value D1* as described above (see equations [2]-[4]).

This advantageous variant of the method allows avoiding misordering of the data units transmitted by the network node N. Misordering may raise for example when two successive data units comprised in a traffic flow, carrying the same service, are transmitted through two different transmission interfaces having different capacities and different delays. It is possible that, if the first data unit is transmitted through a slower transmission interface, this first data unit reaches its destination after the second data unit. This advantageous variant of the method according to the present invention allows taking into account the inherent delay of each transmission interface (and accordingly of each communication link), since the threshold of each counter depends on the difference between the delay of the transmission interface associated thereto and the delay of the fastest transmission interface. The slower the transmission interface, the higher its respective threshold. In view of the above, the method according to this variant advantageously allows to preserve the ordering of the data units even by distributing such data units among different interfaces, which allows exploiting the capacities of the interfaces in a very efficient way.

When at step 403 the values of the counters are read to select the transmission interface in charge of transmitting the data unit, the control logic CL, by selecting the interface whose counter has the minimum value (which in any case can not be lower that the respective threshold) automatically selects the fastest interface, i.e. the interface that allows the fastest delivery of the data unit. This advantageously allows avoiding the misordering of the data units belonging to a same traffic flow.

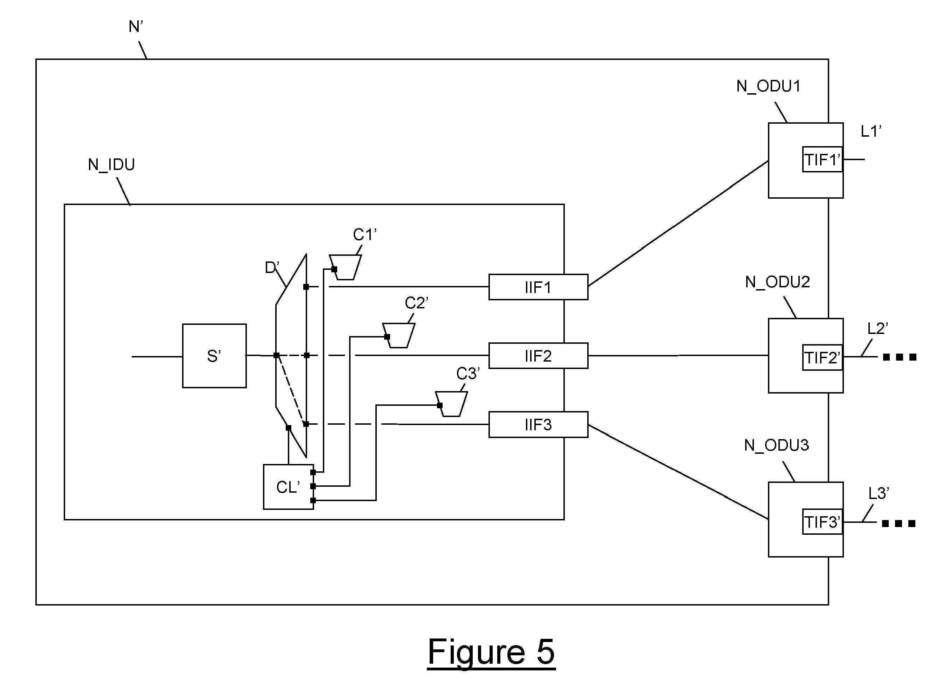

Figure 5 shows an exemplary node N' of a packet-switched communication network according to a second embodiment of the present invention. In particular, node N' may be a node of a packet-switched wireless communication network.

The network node N' preferably comprises an indoor unit N_IDU and one or more outdoor units. In Figure 5, for sake of example, the network node N' comprises three outdoor units N_ODU1, N_ODU2, N_ODU3. The outdoor units N_ODU1, N_ODU2, N_ODU3 are connected to the indoor unit N-IDU by means of suitable wired links, for example Ethernet wired links.

Each outdoor unit N_ODU1, N_ODU2, N_ODU3 comprises a respective transmission interface TIF1', TIF2', TIF3'. Similarly to the transmission interfaces TIF1, TIF2, TIF3 of the network node N, each transmission interface TIF1', TIF2', TIF3' is configured to forward data units over a respective communication link L1', L2', L3' that connects the network node N' to a further node of the communication network, not shown in Figure 5. Each transmission interface TIF1', TIF2', TIF3' has a respective capacity TR1', TR2', TR3'. In case of a packet-switched wireless communication network, the communication links L1', L2', L3' are radio links.

The indoor unit N_IDU comprises a scheduler S', a dispatcher D', a control logic CL' and a number of counters C1', C2', C3'. The indoor unit N_IDU further comprises a number of intermediate interfaces IIF1, IIF2, IIF3. Each intermediate interface IIF1, IIF2, IIF3 is configured to forward data units towards a respective outdoor unit N_ODU1, N_ODU2, N_ODU3. The scheduler S', the dispatcher D', the control logic CL' and the counters C1', C2', C3' are substantially the same as the scheduler S, the dispatcher D, the control logic CL and the counters C1, C2, C3 described above with reference to Figures 1, 2 and 3. In particular, each counter C1', C2', C3' is associated to a respective intermediate interface IIF1, IIF2, IIF3 and hence to a respective transmission interface TIF1', TIF2', TIF3'.

The operation of dispatcher D', the control logic CL' and the counters C1', C2', C3' is substantially the same as the operation of the dispatcher D, the control logic CL and the counters C1, C2, C3 described above and shown in Figure 4. Hence, a detailed description will not be repeated and the operation of such components will be only briefly summarized herein after.

In operating conditions, each time the scheduler S' receives a data unit, it forwards the data unit to the dispatcher D' according to a CoS-based order of transmission of the data units, as described above.

When the data unit is received by the dispatcher D', the dispatcher D', preferably determines its length (expressed in number of bits or bytes) and informs the control logic CL' about it. Then, the dispatcher D' commands the control logic CL' to read the value of each counter C1', C2', C3'.

Once the control logic CL' has read the values of the counters C1', C2', C3', it determines a minimum value among the values of all the counters C1', C2', C3', according to equation [1] above and identifies the counter having the minimum value. Then, the control logic CL' instructs the dispatcher D' to forward the data unit towards the intermediate interface (and hence towards the transmission interface connected to this intermediate interface) associated to the counter having the minimum value.

At this point, the control logic CL', preferably increases the minimum value of the respective counter by a number equal to the length (expressed in bits or bytes) of the data unit.

During the execution of the steps described above (i.e. steps 400-406 of the flow chart of Figure 4), the control logic CL' (which knows the capacities of the transmission interfaces TIF1', TIF2', TIF3' comprised within the outdoor units N_ODU1, N_ODU2, N_ODU3) preferably decreases the value of each counter C1', C2', C3' at a rate substantially equal to the capacity TR1', TR2', TR3' of the associated transmission interface TIF1', TIF2', TIF3', irrespective of the capacity of the associated intermediate interface IIF1', IIF2', IIF3'. Preferably, if the value of a counter C1', C2', C3' reaches the value zero, the value of the counter C1', C2', C3' is not further decreased.

According to the advantageous variant of the method already described above, the control logic CL' knows not only the capacities TR1', TR2', TR3' of the transmission interfaces TIF1', TIF2', TIF3', but also the nominal values of the delays introduced by each transmission interface upon the data units.

Then, the control logic CL' preferably uses the delays introduced by the transmission interfaces TIF1', TIF2', TIF3' for computing, for each counter C1', C2', C3', a respective threshold according to the steps a)-c) described above. When the thresholds are computed, before starting receiving the data units (i.e. before step 400 of Figure 4), the control logic CL' sets the value of each counter C1', C2', C3' to a number equal to the respective threshold.

During the execution of steps 400-406 of Figure 4, the value of each counter C1', C2', C3' is preferably increased by the length of each data unit forwarded to the associated intermediate interface IIF1, IIF2, IIF3 (and hence to the associated transmission interface TIF1', TIF2', TIF3') and is decreased at a rate corresponding to the capacity TR1', TR2', TR3' of the associated transmission interface TIF1', TIF2', TIF3'. Preferably, if the value of a counter C1', C2', C3' reaches a value equal to the respective threshold T1', T2', T3', the control logic CL' preferably stops decreasing that value.

In view of the above, the method of the present invention may thus be advantageously applied also when the dispatcher D' is not co-located with the transmission interfaces TIF1', TIF2', TIF3'.

When implementing the method described above in this situation, which is typical for a node of a wireless communication network, the values of the counters at the indoor unit N_IDU are decreased according to the capacities of the transmission interfaces TIF1', TIF2', TIF3' comprised in the outdoor units N_ODU1, N_ODU2, N_ODU3, and not the capacities of the intermediate interfaces IIF1, IIF2, IIF3. In other words, at the indoor unit N_IDU the behaviour of the transmission interfaces, which are physically in the outdoor units, is "emulated". In a typical wireless communication network, the intermediate interfaces have equal capacity (for example, 1 Gb/s for 1000 BASE-X Ethernet interfaces). On the contrary, as discussed above, the capacities of the transmission interfaces TIF1', TIF2', TIF3' may be different one from the other and may be subject to variations.

Therefore, according to this second embodiment, the values of the counters within the indoor unit takes into account the data units effectively transmitted by the transmission interfaces in the outdoor units, i.e. the actual status of dynamic occupation of the transmission resources. This advantageously allows distributing the data units among the transmission interfaces by optimising the usage of the transmission resources.

The functions of the various elements shown in the nodes N and N' may be provided through the use of dedicated hardware, as well as hardware capable of executing software in association with appropriate software. The functions of the various elements may be provided by a single dedicated processor, by a single shared processor or by a plurality of individual processors, some of which may be shared. Moreover, the elements may comprise, without limitation, a digital signal processor (DSP) hardware, a network processor, an application specific integrated circuit (ASIC), a field programmable gate array (FPGA), a read-only memory (ROM) for storing software, a random access memory (RAM) and a non volatile storage. Other hardware, conventional and/or custom, may also be included.

It should be appreciated by those skilled in the art that any block diagrams herein, as those of Figures 1, 2, 3 and 5, represent conceptual views of illustrative circuitry embodying the principles of the invention. Similarly, it will be appreciated that any flow charts, flow diagrams, state transition diagrams, pseudo code, and the like, as that of Figure 4, represent various processes which may be substantially represented in computer readable medium and so executed by a computer or processor, whether or not such computer or processor is explicitly shown.

**Claims**

1. A node (N, N') of a packet-switched communication network, said node (N, N') comprising:

   - at least two transmission interfaces (TIF1, TIF2; TIF1', TIF2') having respective transmission capacities (TR1, TR2), said at least two transmission interfaces (TIF1, TIF2; TIF1', TIF2') being associated to respective counters (C1, C2; C1', C2');
   - a dispatcher (D, D') configured to distribute data units of a traffic flow to said at least two transmission interfaces (TIF1, TIF2; TIF1', TIF2'); and
   - a control logic (CL, CL') configured to, upon reception of a data unit (DU):

      - determine a minimum value Vmin among respective values (V1, V2) of said counters (C1, C2; C1', C2');
      - operate said dispatcher (D) to forward said data unit (DU) to the transmission interface associated to the counter Cmin having said minimum value Vmin; and
      - increase said minimum value Vmin by a number indicative of a length PL of said data unit (DU),
      said control logic (CL, CL') being further configured to decrease said values (V1, V2) of said counters at respective rates equal to said respective transmission capacities (TR1, TR2).

2. The node (N, N') according to claim 1, wherein said node (N, N') further comprises, upstream to said dispatcher (D, D'), a scheduler (S, S') configured to:

   - receive said data units of said traffic flow; and
   - determine respective classes of service associated to said data units.

3. The node (N, N') according to claim 2, wherein said scheduler (S, S') is further configured to, if said traffic flow has a transmission rate higher than an overall capacity of said at least two transmission interfaces (TIF1, TIF2; TIF1', TIF2'), deciding whether to discard one or more of said data units based on said determined classes of service.

4. The node (N, N') according to claim 2 or 3, wherein said scheduler (S, S') is further configured to:

   - determine, on the basis of said determined classes of service, an order according to which said data units are to be forwarded to said dispatcher (D, D'); and

- forward said data units to said dispatcher (D, D') according to said determined order.

5. The node (N, N') according to any of the preceding claims, wherein said dispatcher (D, D') is further configured to determine said length r PL of
said data unit (DU) and to inform said control logic (CL, CL') of said length.

6. The node (N, N') according to claim 5, wherein said dispatcher (D, D') is configured to determine said length PL by counting a number of bits or
bytes comprised within said data unit (DU).

7. The node (N, N') according to any of the preceding claims, wherein said control logic (CL, CL') is configured to periodically decrease said values (V1, V2) of said counters by respective amounts (K1, K2) with respective periods (P1, P2),
said respective amounts (K1, K2) and said respective periods (P1, P2) being adjusted in order to match said respective transmission capacities (TR1, TR2).

8. The node (N, N') according to any of the preceding claims, wherein said control logic (CL, CL') is further configured to:

- associate to said at least two transmission interfaces (TIF1, TIF2; TIF1', TIF2') respective thresholds (T1, T2);
- determine said respective thresholds (T1, T2) by:

- determining a minimum delay (Dmin) among delays (D1, D2) of said at least two transmission interfaces (TIF1, TIF2);
- determining a maximum transmission capacity (TRmax) among said transmission capacities (TR1, TR2); and
- computing the threshold (T1, T2) associated to each of said at least two transmission interfaces (TIF1, TIF2; TIF1', TIF2') as a difference between the delay (D1, D2) of said each of said at least two transmission interfaces (TIF1, TIF2; TIF1', TIF2') and said minimum delay (Dmin) and multiplying said difference by said maximum transmission capacity (TRmax),

- stop decreasing said values (V1, V2) when they become equal to said respective thresholds (T1, T2).

9. The node (N') according to any of the preceding claims, wherein said node (N') comprises at least two outdoor units (N_ODU1, N_ODU2) and an indoor unit (N_IDU), wherein said at least two transmission interfaces (TIF1', TIF2') are comprised in said outdoor units (N_ODU1, N_ODU2) and said dispatcher (D') and said control logic (CL') are comprised within said indoor unit (N_IDU).

10. A packet-switched communication network comprising a node (N, N') according to any of the preceding claims.

11. A method for distributing data units of a traffic flow to at least two transmission interfaces (TIF1, TIF2; TIF1', TIF2') of a node (N, N') of a packet-switched communication network, said at least two transmission interfaces (TIF1, TIF2; TIF1', TIF2') having respective transmission capacities (TR1, TR2), said at least two transmission interfaces (TIF1, TIF2; TIF1', TIF2') being associated to respective counters (C1, C2; C1', C2'), said method comprising, for a data unit (DU) of said traffic flow:

a) determining a minimum value Vmin among respective values (V1, V2)
of said counters (C1, C2; C1', C2');
b) forwarding said data unit (DU) to the transmission interface associated to the counter Cmin having said minimum value Vmin; and
c) increasing said minimum value Vmin by a number indicative of a
length of said data unit (DU),

said method further comprising decreasing said values (V1, V2) of said counters at
respective rates equal to said respective transmission capacities (TR1, TR2).

12. A computer program product comprising computer-executable instructions for performing, when the program is run on a computer, the steps of the method according to claim 11.

**Patentansprüche**

1. Knoten (Node, N, N') für ein paketvermitteltes Kommunikationsnetzwerk, wobei der besagte Knoten (N, N') umfasst:

   - mindestens zwei Übermittlungsschnittstellen (Transmission Interface, TIF1, TIF2; TIF1', TIF2') mit jeweiligen Übermittlungskapazitäten (Transmission Capacity, TR1, TR2), wobei die besagten, mindestens zwei Übermittlungsschnittstellen (TIF1, TIF2; TIF1', TIF2') jeweils mit entsprechenden Zählern (Counter, C1, C2; C1', C2') assoziiert sind;
   - einen Zuteiler (Dispatcher, D, D'), der konfiguriert ist für das Verteilen von Dateneinheiten eines Verkehrsflusses an die besagten, mindestens zwei Übermittlungsschnittstellen (TIF1, TIF2; TIF1', TIF2'); und
   - eine Steuerlogik (Control Logic, CL, CL'), die dafür konfiguriert ist, um auf den Empfang einer Dateneinheit (Data Unit, DU) hin Folgendes zu leisten:

      - das Bestimmen eines Mindestwerts Vmin aus entsprechenden Werten (Values, V1, V2) besagter Zähler (C1, C2; C1', C2');
      - den Betrieb besagten Zuteilers (D) zum Weiterleiten besagter Dateneinheit (DU) an die mit besagtem Zähler Cmin mit besagtem Mindestwert Vmin assoziierte Übermittlungsschnittstelle; und
      - das Erhöhen besagten Mindestwerts Vmin um eine die Länge PL besagter Dateneinheit (DU) angebende Zahl,

   wobei besagte Steuerlogik (CL, CL') weiterhin konfiguriert ist für das senken besagter Werte (V1, V2) besagter Zähler um jeweilige Raten, die den besagten, entsprechenden Übermittlungskapazitäten (TR1, TR2) entsprechen.

2. Der Knoten (N, N') nach Anspruch 1, wobei besagter Knoten (N, N') weiterhin dem besagten Zuteiler (D, D') vorgelagert einen Zeitplaner (Scheduler, S, S') umfasst, der konfiguriert ist für:

   - den Empfang besagter Dateneinheiten besagten Verkehrsstroms; und
   - das Bestimmen entsprechender Dienstklassen, die mit besagten Dateneinheiten assoziiert sind.

3. Der Knoten (N, N') nach Anspruch 2, wobei besagter Zeitplaner (S, S') weiterhin dafür konfiguriert ist, um dann, wenn besagter Verkehrsstrom eine Übertragungsrate hat, die über einer Gesamtkapazität der besagten, mindestens zwei Übermittlungsschnittstellen (TIF1, TIF2; TIF1', TIF2') liegt, zu entscheiden, ob eine oder mehrere Dateneinheiten auf der Grundlage der besagten, bestimmten Dienstklassen verworfen werden.

4. Der Knoten (N, N') nach Anspruch 2 oder 3, wobei besagter Zeitplaner (S, S') weiterhin dafür konfiguriert ist, um:

   - auf der Grundlage der besagten, bestimmten Dienstklassen eine Reihenfolge zu bestimmen, in welcher besagte Dateneinheiten an besagten Zuteiler (D, D') weiterzuleiten sind; und
   - besagte Dateneinheiten in besagter, bestimmter Reihenfolge an besagten Zuteiler (D, D') weiterzuleiten.

5. Der Knoten (N, N') nach jeglichem der vorgenannten Ansprüche, wobei besagter Zuteiler (D, D') weiterhin dafür konfiguriert ist, um besagte Länge PL besagter Dateneinheit (DU) zu bestimmen und besagter Steuerungslogik (CL, CL') besagte Länge mitzuteilen.

6. Der Knoten (N, N') nach Anspruch 5, wobei besagter Zuteiler (D, D') konfiguriert ist für das Bestimmen besagter Länge PL durch das Zählen einer Reihe von Bits oder Bytes, die in besagter Dateneinheit (DU) enthalten sind.

7. Der Knoten (N, N') nach einem jeglichen der vorgenannten Ansprüche, wobei besagte Steuerungslogik (CL, CL') konfiguriert ist für das periodische Herabsetzen besagter Werte (V1, V2) besagter Zähler um entsprechende Beträge (K1, K2) mit entsprechenden Zeiträumen (P1, P2), und wobei besagte entsprechende Beträge (K1, K2) und besagte entsprechende Zeiträume (P1, P2) angepasst werden, um mit den besagten, entsprechenden Übermittlungskapazitäten (TR1, TR2) übereinzustimmen.

8. Der Knoten (N, N') nach einem jeglichen der vorgenannten Ansprüche, wobei besagte Steuerungslogik (CL, CL') weiterhin dafür konfiguriert ist, um:

   - den besagten, mindestens zwei Übermittlungsschnittstellen (TIF1, TIF2; TIF1', TIF2') entsprechende Grenzwerte (T1, T2) zuzuordnen;
- die besagten, entsprechenden Grenzwerte (T1, T2) folgendermaßen zu bestimmen:

- durch das Bestimmen einer Mindestverzögerung (Dmin) aus mehreren Verzögerungen (D1, D2) der besagten, mindestens zwei Übermittlungsschnittstellen (TIF1, TIF2);
- durch das Bestimmen einer maximalen Übermittlungskapazität (TRmax) aus besagten Übermittlungskapazitäten (TR1, TR2); und
- durch das Berechnen des mit einer jeden der mindestens zwei Übermittlungsschnittstellen (TIF1, TIF2; TIF1', TIF2') assoziierten Grenzwerts (T1, T2) als Differenz zwischen der Verzögerung (D1, D2) einer jeden der besagten, mindestens zwei Übermittlungsschnittstellen (TIF1, TIF2; TIF1', TIF2') und besagter Mindestverzögerung (Dmin), wobei besagte Differenz mit besagter maximaler Übermittlungskapazität (TRmax) multipliziert wird,

- das Herabsetzen der besagten Werte (V1, V2) zu stoppen, wenn sie besagten entsprechenden Grenzwerten (T1, T2) angeglichen sind.

9. Der Knoten (N') nach einem jeglichen der vorgenannten Ansprüche, wobei besagter Knoten (N') mindestens zwei Außenbereichseinheiten (N_ODU1, N_ODU2) und eine Innenraumeinheit (N_IDU) umfasst, wobei die besagten, mindestens zwei Übermittlungsschnittstellen (TIF1', TIF2') in besagten Außenbereichseinheiten (N_ODU1, N_ODU2) enthalten sind und wobei besagter Zuteiler (D') und besagte Steuerungslogik (CL') in besagter Innenraumeinheit (N_IDU) enthalten sind.

10. Paketvermitteltes Kommunikationsnetzwerk, einen Knoten (N, N') nach einem jeglichen der vorgenannten Ansprüche umfassend.

11. Verfahren für das Verteilen von Dateneinheiten eines Verkehrsstroms auf mindestens zwei Übermittlungsschnittstellen (TIF1, TIF2; TIF1', TIF2') eines Knotens (N, N') eines paketvermittelten Netzwerks, wobei die besagten, mindestens zwei Übermittlungsschnittstellen (TIF1, TIF2; TIF1', TIF2') entsprechende Übermittlungskapazitäten (TR1, TR2) haben, wobei die besagten, mindestens zwei Übermittlungsschnittstellen (TIF1, TIF2; TIF1', TIF2') mit entsprechenden Zählern (C1, C2; C1', C2') assoziiert sind, wobei besagtes für eine Dateneinheit (DU) besagten Verkehrsstroms Folgendes umfasst:

a) das Bestimmen eines Mindestwerts Vmin aus entsprechenden Werten (Values, V1, V2) besagter Zähler (C1, C2; C1', C2');
b) das Weiterleiten besagter Dateneinheit (DU) an die mit besagtem Zähler Cmin mit besagtem Mindestwert Vmin assoziierte Übermittlungsschnittstelle; und
c) das Erhöhen besagten Mindestwerts Vmin um einen Wert, der indikativ für eine Länge der besagten Dateneinheit (DU) ist,

wobei besagtes Verfahren weiterhin das Herabsetzen besagter Werte (V1, V2) besagter Zähler besagter Zähler um jeweilige Raten umfasst, die den besagten, entsprechenden Übermittlungskapazitäten (TR1, TR2) entsprechen.

12. Ein Computerprogramm-Produkt mit computerausführbaren Befehlen zum Durchführen der Schritte des Verfahrens nach Anspruch 11, wenn das Programm auf einem Computer läuft.

**Revendications**

1. Noeud (N, N') d'un réseau à commutation par paquets, ledit noeud (N, N') comprenant :

- au moins deux interfaces de transmission (TIF1, TIF2 ; TIF1', TIF2') possédant des capacités de transmission (TR1, TR2) respectives, lesdites au moins deux interfaces de transmission (TIF1, TIF2 ; TIF1', TIF2') étant associées à des compteurs (C1, C2 ; C1', C2') respectifs ;
- un répartiteur (D, D') configuré pour distribuer des unités de données d'un flux de trafic auxdites au moins deux interfaces de transmission (TIF1, TIF2 ; TIF1', TIF2') ; et
- une logique de commande (CL, CL') configurée pour, sur réception d'une unité de données (DU) :

- déterminer une valeur minimale Vmin parmi les valeurs respectives (V1, V2) desdits compteurs (C1, C2 ;

C1', C2') ;
- faire fonctionner ledit répartiteur (D) pour transférer ladite unité de données (DU) à l'interface de transmission associée au compteur Cmin ayant ladite valeur minimale Vmin ; et
- augmenter ladite valeur minimale Vmin d'un nombre indicatif d'une longueur PL de ladite unité de données (DU),

ladite logique de commande (CL, CL') étant en outre configurée pour réduire lesdites valeurs (V1, V2) desdits compteurs à des fréquences respectives égales auxdites capacités de transmission (TR1, TR2) respectives.

2. Noeud (N, N') selon la revendication 1, dans lequel ledit noeud (N, N') comprend en outre, en amont dudit répartiteur (D, D'), un ordonnanceur (S, S') configuré pour :

- recevoir lesdites unités de données dudit flux de trafic ; et
- déterminer les classes de service respectives associées auxdites unités de données.

3. Noeud (N, N') selon la revendication 2, dans lequel ledit ordonnanceur (S, S') est en outre configuré pour, si ledit flux de trafic présente une fréquence de transmission supérieure à une capacité globale desdites au moins deux interfaces de transmission (TIF1, TIF2 ; TIF1', TIF2'), décider de mettre à l'écart une ou plusieurs desdites unités de données en se basant sur lesdites classes de service déterminées.

4. Noeud (N, N') selon la revendication 2 ou 3, dans lequel ledit ordonnanceur (S, S') est en outre configuré pour :

- déterminer, en se basant sur lesdites classes de service déterminées, un ordre selon lequel lesdites unités de données doivent être transférées audit répartiteur (D, D') ; et
- transférer lesdites unités de données audit répartiteur (D, D') conformément audit ordre déterminé.

5. Noeud (N, N') selon l'une quelconque des revendications précédentes, dans lequel ledit répartiteur (D, D') est en outre configuré pour déterminer ladite longueur PL de ladite unité de données (DU) et pour informer ladite logique de commande (CL, CL') de ladite longueur.

6. Noeud (N, N') selon la revendication 5, dans lequel ledit répartiteur (D, D') est configuré pour déterminer ladite longueur PL en comptant un nombre de bits ou d'octets inclus dans ladite unité de données (DU).

7. Noeud (N, N') selon l'une quelconque des revendications précédentes, dans lequel ladite logique de commande (CL, CL') est configurée pour diminuer périodiquement lesdites valeurs (V1, V2) desdits compteurs de montants (K1, K2) respectifs avec des périodes (P1, P2) respectives, lesdits montants (K1, K2) respectifs et lesdites périodes (P1, P2) respectives étant ajustés en vue de coïncider avec lesdites capacités de transmission (TR1, TR2) respectives.

8. Noeud (N, N') selon l'une quelconque des revendications précédentes, dans lequel ladite logique de commande (CL, CL') est en outre configurée pour :

- associer des seuils (T1, T2) respectifs auxdites au moins deux interfaces de transmission (TIF1, TIF2 ; TIF1', TIF2') ;
- déterminer lesdits seuils (T1, T2) respectifs en :

  - déterminant un retard minimum (Dmin) parmi les retards (D1, D2) desdites au moins deux interfaces de transmission (TIF1, TIF2) ;
  - déterminant une capacité de transmission maximale (TRmax) parmi lesdites capacités de transmission (TR1, TR2) ; et
  - calculant le seuil (T1, T2) associé à chacune desdites au moins deux interfaces de transmission (TIF1, TIF2 ; TIF1', TIF2') sous la forme d'une différence entre le retard (D1, D2) de chacune desdites au moins deux interfaces de transmission (TIF1, TIF2 ; TIF1', TIF2') et ledit retard minimum (Dmin) et en multipliant ladite différence par ladite capacité de transmission maximale (TRmax),

- arrêter de diminuer lesdites valeurs (V1, V2) lorsqu'elles deviennent égales auxdits seuils (T1, T2) respectifs.

9. Noeud (N') selon l'une quelconque des revendications précédentes, dans lequel ledit noeud (N') comprend au moins deux unités d'extérieur (N_ODU1, N_ODU2) et une unité d'intérieur (N_IDU), lesdites au moins deux interfaces de transmission (TIF1', TIF2') étant comprises dans lesdites unités d'extérieur (N_ODU1, N_ODU2) et ledit répartiteur (D') ainsi que ladite logique de commande (CL') étant compris dans ladite unité d'intérieur (N_IDU).

10. Réseau à commutation par paquets comprenant un noeud (N, N') selon l'une quelconque des revendications précédentes.

11. Procédé de distribution d'unités de données d'un flux de trafic vers au moins deux interfaces de transmission (TIF1, TIF2 ; TIF1', TIF2') d'un noeud (N, N') d'un réseau à commutation par paquets, lesdites au moins deux interfaces de transmission (TIF1, TIF2 ; TIF1', TIF2') possédant des capacités de transmission (TR1, TR2) respectives, lesdites au moins deux interfaces de transmission (TIF1, TIF2 ; TIF1', TIF2') étant associées à des compteurs (C1, C2 ; C1', C2') respectifs, ledit procédé comprenant, pour une unité de données (DU) dudit flux de trafic, les étapes suivantes :

> a) déterminer une valeur minimale Vmin parmi les valeurs respectives (V1, V2) desdits compteurs (C1, C2 ; C1', C2') ;
> b) transférer ladite unité de données (DU) à l'interface de transmission associée au compteur Cmin ayant ladite valeur minimale Vmin ; et
> c) augmenter ladite valeur minimale Vmin d'un nombre indicatif d'une longueur de ladite unité de données (DU),

ledit procédé comprenant en outre la réduction desdites valeurs (V1, V2) desdits compteurs à des fréquences respectives égales auxdites capacités de transmission (TR1, TR2) respectives.

12. Produit de programme informatique comprenant des instructions exécutables par ordinateur pour mettre en oeuvre les étapes du procédé selon la revendication 11 lorsque le programme est exécuté sur un ordinateur.

Figure 1

EP 2 547 053 B1

Figure 2

Figure 3

```
              ┌──────────┐
              │  start   │
              └──────────┘
                   │
                   ▼
         ┌───────────────────┐
         │  S receives DU    │ ── 400
         └───────────────────┘
                   │
                   ▼
         ┌───────────────────┐
         │  S schedules DU   │ ── 401
         └───────────────────┘
                   │
                   ▼
      ┌─────────────────────────┐
      │ D determines length PL  │ ── 402
      │        of DU            │
      └─────────────────────────┘
                   │
                   ▼
    ┌────────────────────────────┐
    │ CL reads value Vi of Ci    │ ── 403
    │     ( i=1, ... NC)         │
    └────────────────────────────┘
                   │
                   ▼
    ┌────────────────────────────┐
    │ CL determines Cmin such    │ ── 404
    │ that Vmin=min{Vi, i=1, ...NC}│
    └────────────────────────────┘
                   │
                   ▼
    ┌────────────────────────────┐
    │ CL instructs D to forward  │ ── 405
    │ DU towards TIFmin          │
    │ associated to Cmin         │
    └────────────────────────────┘
                   │
                   ▼
    ┌────────────────────────────┐
    │ CL increases Vmin by PL    │ ── 406
    └────────────────────────────┘
                   │
                   ▼
              ┌──────────┐
              │   end    │
              └──────────┘
```

Figure 4

EP 2 547 053 B1

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030108063 A